# EUROPEAN PATENT APPLICATION

(11) **EP 3 206 102 A2**
(43) Date of publication of application: **16.08.2017**
(21) Application number: 17153181.7
(22) Date of filing: 26.01.2017
(51) Int. Cl.: G05B 23/02

(54) **EVENT-COMBINATION ASSESSMENT APPARATUS**

(30) Priority: 10.02.2016 JP 2016023342
(71) Applicant: Mitsubishi Aircraft Corporation, Aichi 455-8555 (JP)
(72) Inventor: ITO, Shingo, Tokyo, 1088215 (JP); NAKAMURA, Mitsugu, Tokyo, 1088215 (JP); SATO, Keiya, Aichi, 4558555 (JP)
(74) Representative: Henkel, Breuer & Partner

(57) **Abstract**

Provided is an event-combination assessment apparatus including: an event management table (5a) in which to store occurrence probabilities of at least basic events; a minimal-cut-set management table (5b) in which to store minimal cut sets each being a minimal combination of the basic events which possibly causes the top event; a processor (3) that identifies, based on each of the minimal cut sets stored in the minimal-cut-set management table (5b), event combinations each of which possibly causes the top event in combination with a single basic event, and calculates occurrence probabilities of the respective event combinations based on the occurrence probabilities of the basic events stored in the event management table (5a); and an event combination management table (5c) in which to store the event combinations identified by the processor (3) and the occurrence probabilities of the event combinations calculated by the processor (3). Thus, the event-combination assessment apparatus can assess the event combinations each of which possibly causes a top event in combination with a single event.

## Description

### [Technical Field]

The present invention relates to an event-combination assessment apparatus that assesses event combinations each of which could cause a top event in combination with a single event. More particularly, the present invention relates to a safety assessment apparatus using fault tree analysis (FTA), the apparatus being configured to assess safety of an analysis target by calculating how much each of basic events contributes to a top event in FTA based on the occurrence probabilities of the basic events.

### [Background Art]

Patent Literature 1 performs safety assessment by, as shown in Fig. 4, calculating the occurrence probability of a top event based on the occurrence probabilities of basic events, identifying minimal cut sets (minimal combinations of basic events that could cause the top event), and assessing each of the minimal cut sets.

More specifically, for example, a fault tree is created (S1) using lower-level events, which are events that could occur in a largescale plant such as a nuclear power plant, and higher-level events, which are events that could be caused by the lower-level events. Specifically, a higher-level event is located above lower-level events contributable to the higher-level event, and is connected to the lower-level events with a line to represent their relation. The higher-level event is further connected to a higher-level event as its lower-level event. These connected events are represented as a combination of events that could cause a final event located at the top (top event). The occurrence probability of each event is also inputted in this fault tree.

An event tree is also created (S2). The event tree includes an initiating event which could occur in the plant and intermediate events branching as success or failure from the initiating tree or another preceding intermediate event. The event tree represents combinations of branching events along with branching probabilities. Then, the fault tree is linked with another fault tree (S3), and the event tree and the fault tree thus created are linked together (S4).

Then, the occurrence probability of the top event of the fault tree is analyzed (S5), and the occurrence frequency of the end state of a scenario which is a combination of intermediate events of the event tree is analyzed (S6). Then, results of these analyses are outputted (S7). These analysis results include minimal cut sets, which are minimal combinations of events that could cause the top event.

### [Citation List]

### [Patent Literature]

[Patent Literature 1] Japanese Patent Application Publication No. 2002-24337

### [Summary of Invention]

### [Technical Problem]

Conformity certification of civil aircraft regarding prevention of fuel tank explosion includes the following requirement (excerpted from FAA's Advisory Circulars 25.981-1C(a)(3) Fuel Tank Ignition Source Prevention Guidelines):
(a) No ignition source may be present at each point in the fuel tank or fuel tank system where catastrophic failure could occur due to ignition of fuel or vapors. This must be shown by:
   (3) Demonstrating that an ignition source could not result from each single failure, from each single failure in combination with each latent failure condition not shown to be extremely remote, and from all combinations of failures not shown to be extremely improbable. The effects of manufacturing variability, aging, wear, corrosion, and likely damage must be considered.

This requirement corresponds to Airworthiness Examination Guidelines 5-2-16-1c in Japan and AMC 25.981 (a) in Europe.

The conformity to the three parts in this requirement can be shown as follows using FTA.

The conformity to the part "Demonstrating that an ignition source could not result from each single failure" can be shown by demonstrating that there is more than one basic event in each minimal cut set identified using a conventional technique, or in other words, by demonstrating that a single basic event (failure) cannot cause a top event (ignition source).

The conformity to the part "Demonstrating that an ignition source could not result from all combinations of failures not shown to be extremely improbable" can be shown by demonstrating that the occurrence probability of the top event (ignition source) calculated by using a conventional technique is "extremely improbable". An "extremely improbable" occurrence probability is, in a quantitative representation, on the order of 1.0×10⁻⁹/flight hour or lower.

The conformity to the part "Demonstrating that an ignition source could not result from each single failure in combination with each latent failure condition not shown to be extremely remote" can be shown by demonstrating that a latent failure condition that could cause an ignition source in combination with a single failure is "extremely remote". In other words, it is required that a latent failure condition caused by each event in combination with a single event is extremely remote. An "extremely remote" occurrence probability is, in a quantitative representation, on the order of 1.0×10⁻⁷/flight hour or lower.

However, there is no conventional technique for assessing a combination of events that causes a top event in combination with a single event (a single basic event), or for assessing the latency of each basic event. Even if the occurrence probability of the top event is "extremely improbable", it is not preferable in view of the severity of the top event to depend too much on an extremely low occurrence probability of any one of single basic events constituting a minimal cut set.

To show the conformity with the above requirement, it is necessary to take the latency of all the basic events into account, identify a latent failure condition that could cause an ignition source in combination with a single failure based on minimal cut sets, calculate the occurrence probability of the latent failure condition, and demonstrate that the latent failure condition is "extremely remote". This is not easily achievable.

### [Solution to Problem]

An event-combination assessment apparatus according to a first aspect of the present invention for solving the above problem provides an event-combination assessment apparatus that assesses event combinations each of which possibly causes a top event in combination with a single event, characterized in that the event-combination assessment apparatus includes: an event management table in which to store occurrence probabilities of at least basic events; a minimal-cut-set management table in which to store minimal cut sets each being a minimal combination of the basic events which possibly causes the top event; a processor that identifies, based on each of the minimal cut sets stored in the minimal-cut-set management table, the event combinations each of which possibly causes the top event in combination with a single basic event, and calculates occurrence probabilities of the respective event combinations based on the occurrence probabilities of the basic events stored in the event management table; and an event combination management table in which to store the event combinations identified by the processor and the occurrence probabilities of the event combinations calculated by the processor.

An event-combination assessment apparatus according to a second aspect of the present invention for solving the above problem provides the event-combination assessment apparatus according to the first aspect, characterized in that the event-combination assessment apparatus further includes a display unit that displays the occurrence probabilities of the event combinations.

An event-combination assessment apparatus according to a third aspect of the present invention for solving the above problem provides the event-combination assessment apparatus according to the first or second aspect, characterized in that the processor also performs safety assessment by comparing each of the occurrence probabilities of the event combinations with a predetermined occurrence probability.

An event-combination assessment apparatus according to a fourth aspect of the present invention for solving the above problem provides the event-combination assessment apparatus according to the third aspect, characterized in that the event-combination assessment apparatus further includes a display unit that displays a result of the safety assessment performed by the processor.

An event-combination assessment apparatus according to a fifth aspect of the present invention for solving the above problem provides the event-combination assessment apparatus according to the first aspect, characterized in that: latency of at least each of the basic events is additionally stored in the event management table, the latency being information indicating whether the basic event is undetectable or detectable; based on the latency of each of the basic events stored in the event management table, the processor calculates latency information for each of the event combinations, the latency information indicating that none of the basic events constituting the event combination is detectable or that at least one of the basic events constituting the event combination is detectable; and the latency information on each of the event combinations calculated by the processor is additionally stored in the event combination management table.

### [Advantageous Effects of Invention]

The event-combination assessment apparatus according to the first aspect of the present invention includes: an event management table in which to store occurrence probabilities of at least basic events; a minimal-cut-set management table in which to store minimal cut sets each being a minimal combination of the basic events which possibly causes the top event; a processor that identifies, based on each of the minimal cut sets stored in the minimal-cut-set management table, event combinations each of which possibly causes the top event in combination with a single basic event, and calculates occurrence probabilities of the respective event combinations based on the occurrence probabilities of the basic events stored in the event management table; and an event combination management table in which to store the event combinations identified by the processor and the occurrence probabilities of the event combinations calculated by the processor. Thus, the event-combination assessment apparatus allows automatic calculation and storage of the occurrence probability of each event combination which possibly causes the top event in combination with a single basic event.

The event-combination assessment apparatus according to the second aspect of the present invention further includes a display unit that displays the occurrence probabilities of the event combinations, and thus allows checking of the occurrence probabilities of the event combinations.

In the event-combination assessment apparatus according to the third aspect of the present invention, the processor also performs safety assessment by comparing each of the occurrence probabilities of the event combinations with a predetermined occurrence probability. Thus, the event-combination assessment apparatus allows safety assessment of the event combinations.

The event-combination assessment apparatus according to the fourth aspect of the present invention further includes a display unit that displays a result of the safety assessment performed by the processor, and thus allows checking of the result of the safety assessment of the event combinations.

In the event-combination assessment apparatus according to the fifth aspect of the present invention, latency of at least each of the basic events is additionally stored in the event management table, the latency being information indicating whether the basic event is undetectable or detectable; based on the latency of each of the basic events stored in the event management table, the processor calculates latency information for each of the event combinations, the latency information indicating that none of the basic events constituting the event combination is detectable or that at least one of the basic events constituting the event combination is detectable; and the latency information on each of the event combinations calculated by the processor is additionally stored in the event combination management table. Thus, the event-combination assessment apparatus allows safety assessment with the latency of each basic event being into account, by automatically calculating and storing the occurrence probability of each event combination which could cause the top event in combination with a single basic event.

### [Brief Description of Drawings]

[Fig. 1] Fig. 1 is a schematic diagram of an event-combination assessment apparatus according to Embodiment 1 of the present invention, the apparatus being configured to assess event combinations each of which could cause the top event in combination with a single event.
[Fig. 2] Fig. 2 is a flowchart of safety assessment performed by the event-combination assessment apparatus according to Embodiment 1 of the present invention, the apparatus being configured to assess event combinations each of which could cause the top event in combination with a single event.
[Fig. 3] Fig. 3 is a flowchart of safety assessment performed by an event-combination assessment apparatus according to Embodiment 2 of the present invention, the apparatus being configured to assess event combinations each of which could cause the top event in combination with a single event.

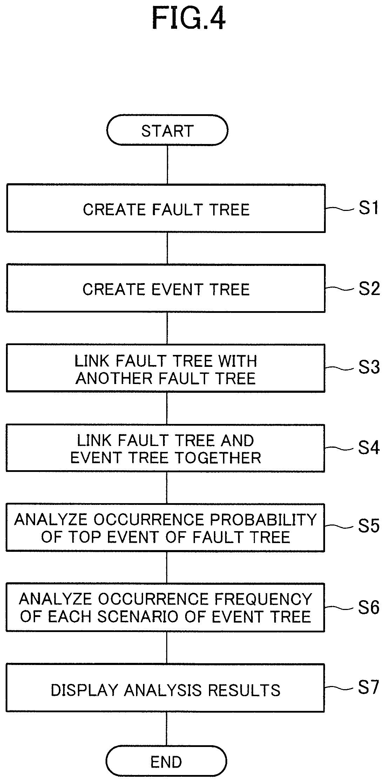

[Fig. 4] Fig. 4 is a flowchart illustrating processing performed by a risk analysis assistance method according to a conventional technique.

### [Description of Embodiments]

The present invention provides an event-combination assessment apparatus that identifies, based on minimal cut sets in FTA, event combinations each of which could cause a top event in combination with a single event, and calculates the occurrence probabilities of the event combinations.

In other words, the present invention is the same as conventional techniques in that probability calculation is performed based on the occurrence probabilities of basic events, but different from them in that the occurrence probability of each event combination that could cause a top event in combination with a single event is automatically calculated based on the occurrence probabilities of basic events.

Using the following embodiments, descriptions are given of the system configuration of the event-combination assessment apparatus and procedures of event-combination assessment performed by the event-combination assessment apparatus.

### [Embodiment 1]

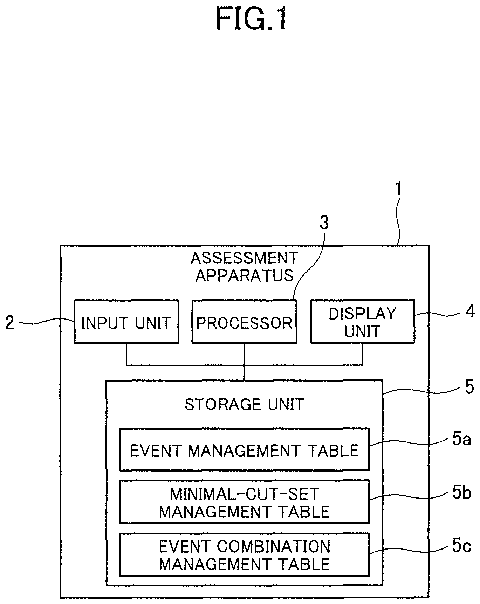

Fig. 1 shows an event-combination assessment apparatus according to Embodiment 1 of the present invention.

As shown in Fig. 1, an assessment apparatus 1 of this embodiment includes an input unit 2, a processor 3, a display unit 4, and a storage unit 5. The storage unit 5 contains an event management table 5a, a minimal-cut-set management table 5b, and an event combination management table 5c.

The input unit 2 is an interface used to enter event information. The event information includes three items: the name of event, the type of event, and the occurrence probability of event. Entries for the event information are stored in the event management table 5a in the storage unit 5.

Table 1 shows an example of the event management table 5a.

**[Table 1]**

| EVENT MANAGEMENT TABLE | | |
|---|---|---|
| Name of Event | Type of Event | Occurrence Probability of Event |
| Failure 1 | Basic Event | 1.0E-5 |
| Failure 2 | Basic Event | 1.0E-7 |
| Failure 3 | Basic Event | 1.0E-4 |
| Failure 4 | Basic Event | 1.0E-5 |
| Failure 5 | Intermediate Event | |
| Failure 6 | Intermediate Event | |
| Failure 7 | Top Event | |
| ... | ... | ... |

As shown in Table 1, as the name of event, the event management table 5a has Failure 1, Failure 2, Failure 3, Failure 4, Failure 5, Failure 6, Failure 7, ···.

As the type of event, Failures 1 to 4 are basic events, Failures 5 and 6 are intermediate events, and Failure 7 is a top event.

The type of event is either "Basic Event", which is a lowermost event in FTA, "Intermediate Event", which is a logic gate, such as an AND gate or an OR gate, formed by a combination of basic events, or "Top Event" formed by basic events and intermediate events.

As the occurrence probability of event, Failure 1, Failure 2, Failure 3, and Failure 4 have 1.0×10⁻⁵, 1.0×10⁻⁷, 1.0×10⁻⁴, and 1.0×10⁻⁵, respectively.

The occurrence probability of event is entered for basic events only. The occurrence probabilities of the intermediate events and of the top event do not need to be entered using the input unit 2 because they are calculated by the processor 3 based on the occurrence probabilities of the basic events.

In this and following tables, "1.0E-5", for example, means "1.0×10⁻⁵".

The event information to be entered using the input unit 2 may be stored in the event management table 5a in advance.

The processor 3 is an arithmetic unit that identifies minimal cut sets. Information identified as a minimal cut set contains the names of basic events that constitute the minimal cut set. The minimal cut sets thus identified are stored in the minimal-cut-set management table 5b.

Table 2 shows an example of the minimal-cut-set management table 5b.

**[Table 2]**

| MINIMAL-CUT-SET MANAGEMENT TABLE | | | | | |
|---|---|---|---|---|---|
| Minimal Cut Set No. | Basic Event 1 | Basic Event 2 | Basic Event 3 | Basic Event 4 | ... |
| 1 | Failure 1 | Failure 2 | Failure 3 | | ... |
| 2 | Failure 1 | Failure 3 | Failure 4 | | ... |
| ... | ... | ... | ... | ... | ... |

As shown in Table 2, Basic Event 1, Basic Event 2, and Basic Event 3 are respectively Failure 1, Failure 2, and Failure 3 for a minimal cut set 1, and Failure 1, Failure 3, and Failure 4 for a minimal cut set 2. In this example, the number of basic events in a minimal cut set is three or more.

In actual safety assessment, information on connections between events constituting a fault tree is entered using the input unit 2, and the processor identifies minimal cut sets based on this information. These are known operations achievable by conventional techniques and are outside the scope of the present invention. Thus, no detailed description is given regarding them.

The minimal cut sets may be identified in advance and stored in the minimal-cut-set management table 5b.

The processor 3 further identifies event combinations each of which could cause the top event in combination with a single event, and calculates the occurrence probabilities of the event combinations each of which could cause the top event in combination with a single event. The identified event combinations and the calculated occurrence probabilities of the event combinations are stored in the event combination management table 5c.

Table 3 shows an example of the event combination management table 5c.

**[Table 3]**

| EVENT COMBINATION MANAGEMENT TABLE | | | | | | |
|---|---|---|---|---|---|---|
| Event Combination No. | Minimal Cut Set No. | Single Event | Event Combination | | | Occurrence Probability of Event Combination |
| 1 | 1 | Failure 1 | Failure 2 | Failure 3 | ... | 1.0E-11 |
| 2 | 1 | Failure 2 | Failure 1 | Failure 3 | ... | 1.0E-09 |
| 3 | 1 | Failure 3 | Failure 1 | Failure 2 | ... | 1.0E-12 |
| 4 | 2 | Failure 1 | Failure 3 | Failure 4 | ... | 1.0E-09 |
| 5 | 2 | Failure 3 | Failure 1 | Failure 4 | ... | 1.0E-10 |
| 6 | 2 | Failure 4 | Failure 1 | Failure 3 | ... | 1.0E-09 |
| ... | ... | ... | ... | ... | ... | ... |

As shown in Table 3, a record for each event combination contains the number of a minimal cut set, a single event which is one of basic events in the minimal cut set, a combination of the remaining basic events (an event combination), and the occurrence probability of the event combination. In this example, event combinations 1, 2, and 3 correspond to the minimal cut set 1, and event combinations 4, 5, and 6 correspond to the minimal cut set 2. Since these minimal cut sets each consist of three basic events, there are three event combinations for each of the minimal cut sets. Thus, the total number of event combinations is 3 × 2=6.

The processor 3 further performs safety assessment by comparing the calculated occurrence probability of each event combination with 1.0×10⁻⁷, which is equivalent to the "extremely remote" occurrence probability.

The display unit 4 displays the event information entered using the input unit 2, the occurrence probabilities of intermediate events, of the top event, and of the event combinations calculated by the processor 3, and results of the safety assessment performed by the processor 3. This enables checking of the occurrence probabilities of the event combinations and the results of the safety assessment.

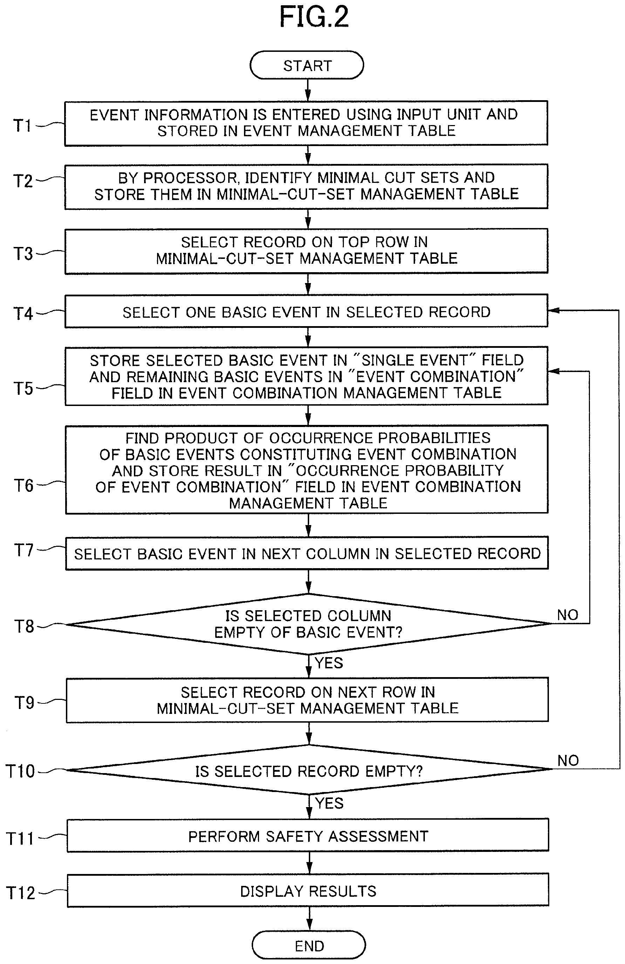

With reference to the flowchart in Fig. 2, a description is given of an example of procedures in which the assessment apparatus 1 according to this embodiment having the above-described configuration performs automatic safety assessment of each event combination that could cause the top event in combination of a single event.

First, event information is entered using the input unit 2 and stored in the event management table 5a (Step T1).

Next, the processor 3 identifies minimal cut sets and stores them in the minimal-cut-set management table 5b (Step T2).

Then, the processor 3 selects a record in the minimal-cut-set management table 5b (Step T3). For instance, a record (row) whose "Minimal Cut Set No." field is 1, namely the minimal cut set 1, is selected in the minimal-cut-set management table 5b.

Next, the processor 3 selects one of basic events in the selected record (Step T4). For instance, "Basic Event 1" (Failure 1) of the minimal cut set 1 (the record selected in Step T3) is selected.

The processor 3 specifies the selected basic event as a single event and a group of the remaining basic events as an event combination, and stores them respectively in the "Single Event" and "Event Combination" fields of the event combination management table 5c (Step T5). For instance, the processor 3 specifies the basic event selected in Step T4 (Failure 1) as a single event and a combination of the remaining basic events (Failure 2 and Failure 3) as an event combination, and stores them respectively in the "Single Event" and "Event Combination" fields for the event combination 1 in the event combination management table 5c.

The processor 3 further finds the product of the occurrence probabilities of the basic events constituting the event combination as the occurrence probability of the event combination, and stores it in the "Occurrence Probability of Event Combination" field of the event combination management table 5c (Step T6). For instance, the processor 3 finds the product of the occurrence probabilities of the basic events constituting the event combination 1, namely the occurrence probability of the basic event "Failure 2" (1.0×10⁻⁷) and the occurrence probability of the basic event "Failure 3" (1.0×10⁻⁴) as the occurrence probability of the event combination (1.0×10⁻⁷×1.0×10⁻⁴=1.0×10⁻¹¹) and stores the product in the "Occurrence Probability of Event Combination" field for the event combination 1 in the event combination management table 5c.

Then, the processor 3 selects, in the record selected in Step T3, a basic event in the next column (Step T7). For instance, Basic Event 2 (Failure 2) in a column next to Basic Event 1 (Failure 1) selected in Step T4 is selected.

The processor 3 determines whether the column selected in Step T7 is empty of a basic event (Step T8). The processor 3 repeats steps from Step T5 when the column selected in Step T7 is not empty of a basic event, i.e., when the column selected contains a basic event, and proceeds to Step T9 when the column selected in Step T7 is empty of a basic event, i.e., when the column selected contains no basic event.

For example, for the record (row) in the minimal-cut-set management table 5b whose "Minimal Cut Set No." field is 1, Steps T5 to T7 are repeated until Basic Event 2 and Basic Event 3 are all selected.

Specifically, the processor 3 specifies Basic Event 2 of the minimal cut set 1 (Failure 2) as a single event and a combination of the remaining basic events (Failure 1 and Failure 3) as an event combination, and stores them respectively in the "Single Event" and "Event Combination" fields for the event combination 2 in the event combination management table 5c. The processor 3 then finds the product of the occurrence probabilities of the basic events constituting the event combination 2, namely the occurrence probability of the basic event "Failure 1" (1.0×10⁻⁵) and the occurrence probability of the basic event "Failure 3" (1.0×10⁻⁴) as the occurrence probability of the event combination (1.0×10⁻⁵×1.0×10⁻⁴=1.0×10⁻⁹), and stores the product in the "Occurrence Probability of Event Combination" field for the event combination 2 in the event combination management table 5c. The same applies to the case where Basic Event 3 of the minimal cut set 1 (Failure 3) is specified as a "single event".

When there is no more basic event to select in Step T7, the processor 3 selects a next record in the minimal-cut-set management table 5b (Step T9). For instance, a record (row) whose "Minimal Cut Set No." field is 2, namely a minimal cut set 2, is selected in the minimal-cut-set management table 5b.

Then, the processor 3 determines whether the record selected in Step T9 is empty (Step T10). The processor 3 repeats steps from Step T4 when the record is not empty, i.e., when the selected record (row) contains a minimal cut set, and proceeds to Step T11 when the record is empty, i.e., when the selected record (row) contains no minimal cut set. In other words, the processor 3 repeats Steps T4 to T7 until all of the remaining minimal cut sets 2, 3, ... in the minimal-cut-set management table 5b are selected.

When all the records (rows) of minimal cut sets have been selected, the processor 3 performs safety assessment by comparing the occurrence probability of each of the event combinations in the event combination management table 5c with 1.0×10⁻⁷, which is equivalent to the "extremely remote" occurrence probability (Step T11).

Specifically, the processor 3 determines that the assessment result is "conformable" when the occurrence probability of every event combination is 1.0×10⁻⁷ or lower and is "non-conforming" when the occurrence probability of any of the event combinations exceeds 1.0×10⁻⁷.

In the example shown in Table 3, none of the occurrence probabilities of the event combinations in the event combination management table 5c exceeds 1.0×10⁻⁷ which is equivalent to the "extremely remote" occurrence probability. Thus, the assessment result is determined to be "conformable".

Next, the display unit 4 displays the assessment result which is "conformable" or "non-conforming" (Step T12). The display unit 4 may also display the occurrence probabilities of the event combinations stored in the event combination management table 5c.

As described thus far, the event-combination assessment apparatus of this embodiment can perform safety assessment by identifying event combinations each of which could cause the top event in combination with a single event and calculating the occurrence probabilities of the event combinations.

To be more specific, even if the occurrence probability of the top event is "extremely improbable", it is not preferable in view of the severity of the top event to depend too much on an extremely low occurrence probability of any one of single basic events constituting a minimal cut set, and it is therefore necessary to lower all the occurrence probabilities in a distributed manner. Conventionally, a latent failure condition that could cause an ignition source in combination with a single failure is identified based on minimal cut sets, and the occurrence probability of the latent failure condition is calculated to demonstrate that the latent failure condition is "extremely remote", with the latency of all the basic events being taken into account. The prevent invention, on the other hand, can easily calculate the occurrence probabilities of all the basic events without taking latency into account.

### [Second Embodiment]

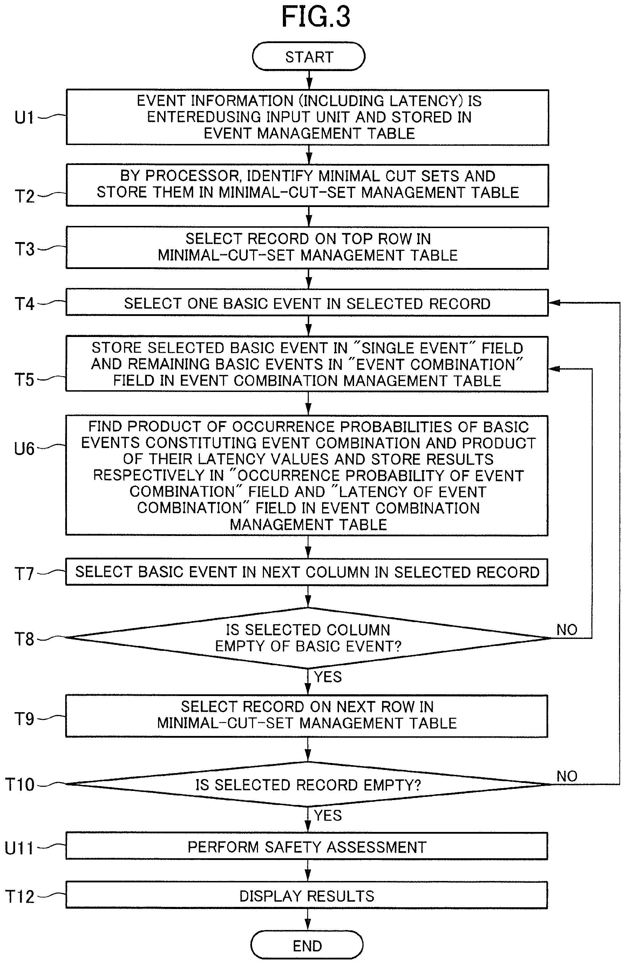

An event-combination assessment apparatus according to Embodiment 2 of the present invention is described with reference to Fig. 3.

This embodiment has, in addition to the functions of Embodiment 1, a function of identifying the latency of an event combination based on the latency of basic events.

As in Embodiment 1, an assessment apparatus 1 of this embodiment includes, as shown in Fig. 1, an input unit 2, a processor 3, a display unit 4, and a storage unit 5. The storage unit 5 contains an event management table 5a, a minimal-cut-set management table 5b, and an event combination management table 5c.

The assessment apparatus 1 of this embodiment additionally has the following function.

Specifically, in this embodiment, the input unit 2 is an interface used to enter event information additionally including latency. Thus, the event information includes four items: the name of event, the type of event, the occurrence probability of event, and latency. Entries for the event information are stored in the event management table 5a in the storage unit 5.

Table 4 shows an example of the event management table 5a.

**[Table 4]**

| EVENT MANAGEMENT TABLE | | | |
|---|---|---|---|
| Name of Event | Type of Event | Occurrence Probability of Event | Latency |
| Failure 1 | Basic Event | 1.0E-5 | 1 |
| Failure 2 | Basic Event | 1.0E-7 | 0 |
| Failure 3 | Basic Event | 1.0E-4 | 0 |
| Failure 4 | Basic Event | 1.0E-5 | 1 |
| Failure 5 | Intermediate Event | | |
| Failure 6 | Intermediate Event | | |
| Failure 7 | Top Event | | |
| ... | ... | ... | ... |

The event management table 5a shown in Table 4 includes a "Latency" field in addition to the fields in Table 1. This "Latency" field shows information indicating whether occurrence of the event is detectable. An event is latent when "1" is entered in the "Latency" field, and is not latent when "0" is entered in the "Latency" field.

In other words, "1" as "Latency" is information indicating that the event is undetectable, and "0" as "Latency" is information indicating that the event is detectable.

The processor 3 of this embodiment is an arithmetic unit that calculates the occurrence probabilities of intermediate events and of a top event based on the occurrence probabilities of the basic events and also identifies minimal cut sets, as is the processor 3 of Embodiment 1.

Thus, the storage unit 5 of this embodiment has the same minimal-cut-set management table 5b (that is, Table 2) as that of Embodiment 1.

The processor 3 also identifies each event combination that could cause the top event in combination with a single event, finds the product of the occurrence probabilities of basic events constituting the event combination as "Occurrence Probability of Event Combination", and finds the product of the "Latency" values of these basic events as "Latency of Event Combination". The identified event combination is stored in the event combination management table 5c along with its "Occurrence Probability of Event Combination" value and "Latency of Event Combination" value.

Table 5 shows an example of the event combination management table 5c of this embodiment.

**[Table 5]**

| EVENT COMBINATION MANAGEMENT TABLE | | | | | | | |
|---|---|---|---|---|---|---|---|
| Event Combination No. | Minimal Cut Set No. | Single Event | Event Combination | | | Occurrence Probability of Event Combination | Latency of Event Combination |
| 1 | 1 | Failure 1 | Failure 2 | Failure 3 | ... | 1.0E-11 | 0 |
| 2 | 1 | Failure 2 | Failure 1 | Failure 3 | ... | 1.0E-09 | 0 |
| 3 | 1 | Failure 3 | Failure 1 | Failure 2 | ... | 1.0E-12 | 0 |
| 4 | 2 | Failure 1 | Failure 3 | Failure 4 | ... | 1.0E-09 | 0 |
| 5 | 2 | Failure 3 | Failure 1 | Failure 4 | ... | 1.0E-10 | 1 |
| 6 | 2 | Failure 4 | Failure 1 | Failure 3 | ... | 1.0E-09 | 0 |
| ... | ... | ... | ... | ... | ... | ... | ... |

The event combination management table 5c shown in Table 5 has a "Latency of Event Combination" field in addition to the fields in Table 3. When an event combination contains even one basic event that is not latent, the basic event makes the event combination detectable. Thus, the event combination is determined as being not latent. The "Latency of Event Combination" field shows the thus-determined latency of each event combination.

For instance, for the event combination 2 consisting of Failure 1 and Failure 3 whose latency values are respectively "1" and "0", the "Latency of Event Combination" value is "0" as the product of their latency values. More specifically, Failure 1 has a latency value of "1" meaning that Failure 1 is an undetectable event, and Failure 3 has a latency value of "0" meaning that Failure 3 is a detectable event. Since at least one of these events (Failure 3) is detectable, the event combination 2 is detectable and determined as being not latent.

On the other hand, for the event combination 5 consisting of Failure 1 and Failure 4 whose latency values are both "1", the "Latency of Event Combination" value is "1" as the product of their latency values. More specifically, Failure 1 and Failure 4 both have a latency value of "1" meaning that they are both an undetectable event. The event combination 5 is therefore undetectable and determined as being latent.

With reference to the flowchart shown in Fig. 3 and the flowchart shown in Fig. 2 as a comparison, a description is given of an example of procedures in which the assessment apparatus 1 according to this embodiment having the above-described configuration performs automatic safety assessment of each event combination that could cause the top event in combination of a single event.

Specifically, in this embodiment, in place of Step T1 in Fig. 2, event information additionally including latency values is entered using the input unit 2 and stored in the event management table 5a (Step U1).

Then, in place of Step T6 in Fig. 2, the processor 3 finds the product of the occurrence probabilities of the basic events constituting the event combination as the occurrence probability of the event combination as well as the product of the latency values for the basic events constituting the event combination as the latency of the event combination, and stores them respectively in the "Occurrence Probability of Event Combination" and "Latency of Event Combination" fields of the event combination management table 5c (Step U6).

In place of Step T11 in Fig. 2, when all the minimal cut sets, i.e., records (rows), have been selected, the processor 3 performs safety assessment by comparing the occurrence probability of each of only the event combinations whose "Latency of Event Combination" is "1" in the event combination management table 5c, with 1.0×10⁻⁷, which is equivalent to the "extremely remote" occurrence probability (Step U11).

To be more specific, the processor 3 determines that the assessment result is "conformable" when the occurrence probability of the event combination whose "Latency of Event Combination" is "1" is 1.0×10⁻⁷ or lower and is "non-conforming" when the occurrence probability of the event combination whose "Latency of Event Combination" is "1" exceeds 1.0×10⁻⁷.

In the example shown in Table 5, the occurrence probability of the event combination 5 whose "Latency of Event Combination" is "1" in the event combination management table 5c does not exceed 1.0×10⁻⁷, which is equivalent to the "extremely remote" occurrence probability. Thus, the assessment result is determined to be "conformable".

An event combination whose "Latency of Event Combination" is "0" is considered less important as a safety assessment target than an event combination whose "Latency of Event Combination" is "1" meaning that the event combination is undetectable and that no countermeasure cannot be taken thereagainst. Thus, an event combination whose "Latency of Event Combination" is "0" is excluded from the safety assessment. In other words, the safety assessment of Embodiment 1 does not have to be performed on an event combination whose "Latency of Event Combination" is "0".

Thus, in Step U6, an occurrence probability does not have to be calculated for an event combination whose "Latency of Event Combination" is "0".

Other steps are the same as those in the flowchart shown in Fig. 2. In Step T12, the display unit 4 may display not only the assessment result which is "conformable" or "non-conforming", but also "Latency of Event Combination".

This embodiment described in detail above enables safety assessment to be performed, with the latency of basic events taken into account, by calculating the occurrence probabilities of event combinations each identified as possibly causing the top event in combination with a single event.

When safety assessment is performed only on an event combination whose "Latency of Event Combination" is "1", namely, on an event combination which is important as a safety assessment target, the occurrence probabilities of event combinations whose "Latency of Event Combination" is "0" do not need to be calculated, which leads to faster processing.

### [Industrial Applicability]

The present invention can be widely used in industry as an apparatus that assesses an event combination that could cause a top event in combination with a single event. The present invention is particularly advantageous for use in safety analysis for type certification of a small passenger aircraft.

### [Reference Signs List]

- 1: ASSESSMENT APPARATUS
- 2: INPUT UNIT
- 3: PROCESSOR
- 4: DISPLAY UNIT
- 5: STORAGE UNIT
- 5a: EVENT MANAGEMENT TABLE
- 5b: MINIMAL-CUT-SET MANAGEMENT TABLE
- 5c: EVENT COMBINATION MANAGEMENT TABLE

## Claims

1. An event-combination assessment apparatus (1) that assesses event combinations each of which possibly causes a top event in combination with a single event, **characterized in that**
the event-combination assessment apparatus (1) comprises:
an event management table (5a) in which to store occurrence probabilities of at least basic events;
a minimal-cut-set management table (5b) in which to store minimal cut sets each being a minimal combination of the basic events which possibly causes the top event;
a processor (3) that identifies, based on each of the minimal cut sets stored in the minimal-cut-set management table (5b), the event combinations each of which possibly causes the top event in combination with a single basic event, and calculates occurrence probabilities of the respective event combinations based on the occurrence probabilities of the basic events stored in the event management table (5a); and
an event combination management table (5c) in which to store the event combinations identified by the processor (3) and the occurrence probabilities of the event combinations calculated by the processor (3).

2. The event-combination assessment apparatus (1) according to claim 1, **characterized in that**
the event-combination assessment apparatus (1) further comprises a display unit (4) that displays the occurrence probabilities of the event combinations.

3. The event-combination assessment apparatus (1) according to claim 1 or 2, **characterized in that**
the processor (3) also performs safety assessment by comparing each of the occurrence probabilities of the event combinations with a predetermined occurrence probability.

4. The event-combination assessment apparatus (1) according to claim 3, **characterized in that**
the event-combination assessment apparatus (1) further comprises a display unit (4) that displays a result of the safety assessment performed by the processor (3).

5. The event-combination assessment apparatus (1) according to claim 1, **characterized in that**
latency of at least each of the basic events is additionally stored in the event management table (5a), the latency being information indicating whether the basic event is undetectable or detectable,
based on the latency of each of the basic events stored in the event management table (5a), the processor (3) calculates latency information for each of the event combinations, the latency information indicating that none of the basic events constituting the event combination is detectable or that at least one of the basic events constituting the event combination is detectable, and
the latency information on each of the event combinations calculated by the processor (3) is additionally stored in the event combination management table (5c).
